(19) **Europäisches Patentamt / European Patent Office / Office européen des brevets**

(11) **EP 3 978 774 B1**

(12) **EUROPEAN PATENT SPECIFICATION**

(45) Date of publication and mention
of the grant of the patent:
**31.01.2024 Bulletin 2024/05**

(21) Application number: **20199725.1**

(22) Date of filing: **02.10.2020**

(51) International Patent Classification (IPC):
*F16D 48/06* *(2006.01)*

(52) Cooperative Patent Classification (CPC):
**F16D 48/062;** F16D 2500/1024; F16D 2500/10412;
F16D 2500/3022; F16D 2500/30415;
F16D 2500/30426; F16D 2500/3166;
F16D 2500/50245; F16D 2500/50257;
F16D 2500/5026; F16D 2500/7041;
F16D 2500/70414

(54) **METHOD FOR CONTROLLING A COUPLING SYSTEM OF A MECHANICAL TRANSMISSION**

VERFAHREN ZUR STEUERUNG EINES KUPPLUNGSSYSTEMS EINES MECHANISCHEN GETRIEBES

PROCÉDÉ DE COMMANDE D'UN SYSTÈME DE COUPLAGE D'UNE TRANSMISSION MÉCANIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.04.2022 Bulletin 2022/14**

(73) Proprietor: **Robert Bosch GmbH**
**70442 Stuttgart (DE)**

(72) Inventors:
 • **Werner, Franz**
  **89129 Langenau (DE)**
 • **Ilk, Erich**
  **86169 Augsburg (DE)**
 • **Hernandez Ladera, Paul Luis**
  **89275 Elchingen (DE)**

(56) References cited:
 WO-A1-2016/008463    DE-A1-102012 005 765
 DE-A1-102015 208 822    DE-A1-102019 124 867
 US-A1- 2010 033 890    US-A1- 2018 162 378

**Description**

TECHNICAL FIELD

The present invention relates to a method for controlling a coupling system of a mechanical transmission. See as prior art of control methods document DE 10 2015 208 822.

PRIOR ART

In order to increase the transmission ratio range of a traction drive, hydrostatic transmissions with two hydraulic motors which are operated fluidically in parallel are known from the state of the art. The drive shaft power thereof can be added via a compounding transmission of the hydrostatic transmission and transmitted, for example, to a vehicle axle. For example, at a low velocity both hydraulic motors are in parallel operation and therefore permit a high traction force. Given a predefined delivery quantity of the hydraulic pump and against the background that the reduction of the swept volumes of the hydraulic motors entails a decreasing efficiency level, the velocity which can be achieved with two motors is limited.

In order to obtain a driving range of a relatively high velocity, one of the hydraulic motors can therefore be set to expulsion volume zero and be disconnected from the output by means of a clutch. The entire volume flow of the hydraulic pump is therefore directed via the remaining, usually smaller hydraulic motor, which permits relatively high rotational speeds and therefore relatively high velocities.

If both hydraulic motors then contribute again to the transmission of power, the clutch must be closed. For this purpose, the hydraulic motor which is previously disconnected from the output has to be accelerated from a wheeling state to its working rotational speed. This acceleration process is to take place both quickly and as far as possible without being noticed by the driver. Owing to these, to a certain extent, contradictory requirements, the control of the coupling process is demanding.

The clutch is activated, for example, by means of a hydraulic cylinder. Depending on the design, the closing of the clutch is brought about here either by the application of pressure medium to the hydraulic cylinder (positive clutch) or by the discharging of pressure medium from the hydraulic cylinder (negative clutch).

In principle, in a positive clutch system (in a negative clutch system the process is the opposite), the closing process of the clutch can be divided into two phases. In a first phase, the pressure medium is supplied in such a way that the clutch is engaged as quickly as possible, that is to say the clutch stroke is implemented so that the kiss point is reached in the shortest possible time. The second phase starts from the kiss point, that is to say if torque is being transmitted by the clutch. Starting from this point, the supply of pressure medium mainly only then brings about an increase in the transmissible torque of the clutch and no longer a clutch stroke.

The first phase is optimally very short in terms of time and ends in a position directly before the kiss point (the kiss point of a clutch is defined herein as the position of a clutch when the clutch makes initial frictional contact and begins transmitting torque between two different elements). The second phase is then preferably controlled in such a way that the respective hydraulic motor is accelerated in the desired way.

The present invention regards to a method which enables to increase the flexibility of said second phase for controlling the movement of different clutch designs.

SUMMARY

According to an embodiment of the present invention a method for controlling a coupling system of a summation mechanical transmission which is configured to couple a first drive shaft and a second drive shaft during coupling is provided, the coupling system comprising an hydraulic coupling with two releasable coupling sections, wherein a first coupling section is connected to the first drive shaft and a second coupling section is connected to the second drive shaft, the coupling system further comprising an hydraulic cylinder which is connected to one of the first and the second coupling sections and is configured to engage and to disengage said first coupling section with said second coupling section based on a pressure inside said hydraulic cylinder, wherein the pressure inside said hydraulic cylinder can be regulated by means of a pressure regulating device, wherein said pressure regulating device comprises activating means, which are configured to regulate the pressure inside said hydraulic cylinder based on a current provided to said activating means;

the method comprising the following steps:

> a. Proving said activating means with a current for a first time interval such that said first coupling section and said second coupling section are approached to each other but the kiss point has still not be reached;

b. After said first time interval providing said activating means during a modulation time interval with a current such that the approaching speed of said first coupling section and said second coupling section is slowed down with respect to the approaching during said first time interval, wherein during said modulation time interval the kiss point is reached;

wherein said modulation time interval is divided into a second time interval and a third time interval, wherein both in said second time interval and said third time interval the current provided to said activating means is gradually increased or decreased with a predetermined slope, wherein the slope of the current during said second time interval is different with respect to the slope of the current during said third time interval.

According to a further embodiment of the present invention a method is provided, wherein when a speed difference between said first coupling section and said second coupling section is lower than a predetermined value , said third time interval is ended and a current is provided to said activating means so that said first coupling section and said second coupling section are completely engaged with each other.

According to a further embodiment of the present invention a method is provided, wherein said first drive shaft is connected to a first hydraulic motor and said second drive shaft is connected to a second hydraulic motor, wherein said first and said second hydraulic motors are motors of an hydraulic transmission.

According to a further embodiment of the present invention a method is provided, wherein said coupling system is a mechanical transmission of a vehicle, which is positioned between a hydrostatic transmission comprising a plurality of motors and an output shaft of the summation mechanical transmission.

According to a further embodiment of the present invention a method is provided, wherein said first time interval is a time used in an engagement process during which the first coupling section and the second coupling section (30) are going to be engaged with each other, wherein during said first time interval ($t_1$) the first coupling section and the second coupling section approach each other at the beginning of said engagement process before the approaching of the first coupling section and the second coupling section is slowed down during said second time interval.

According to a further embodiment of the present invention a method is provided, wherein said activating means is an electromagnet.

BRIEF DESCRIPTION OF THE FIGURES

The present invention is described with reference to the enclosed figures wherein the same reference numbers refer to the same parts and/or to similar parts and/or to corresponding parts of the system. In the figures:

Figure 1 schematically shows a hydraulic diagram according to the state of the art;

Figure 2 shows a value of the pressure measured by the sensor 54 during the closing of the coupling system 12 and the current delivered to the electromagnet 78 through the signal line 80 according to a preferred embodiment of the present invention;

Figure 3 shows the method used for estimating an interpolating function, which is a function representing the emptying time $t_1$ over the temperature according to a preferred embodiment of the present invention;

Figure 4 shows the method used for detecting the kiss point according to a preferred embodiment of the present invention;

Figure 5 shows a first method for controlling the coupling system according to a preferred embodiment of the present invention;

Figure 6 shows a second method for controlling the coupling system according to a preferred embodiment of the present invention.

DETAILED DESCRIPTION

In the following, the present invention is described with reference to particular embodiments as shown in the enclosed figures. Nevertheless, the present invention is not limited to the particular embodiments described in the following detailed description and shown in the figures, but rather the embodiments described simply exemplify several aspects of the present invention, the scope of which is defined by the claims.

Further modifications and variations of the present invention will be clear for the person skilled in the art. The present description is thus to be considered as including all said modifications and/or variations of the present invention, the scope of which is defined by the claims.

In the present disclosure with the term "pressure medium" it is meant each type of medium, which can be pressurized and can be used to transmit power to different hydraulic elements, like an hydraulic oil.

It is to be noted that the particular physical values used for describing some working examples of the invention does not limit the scope of the invention, which is defined by the appended claims.

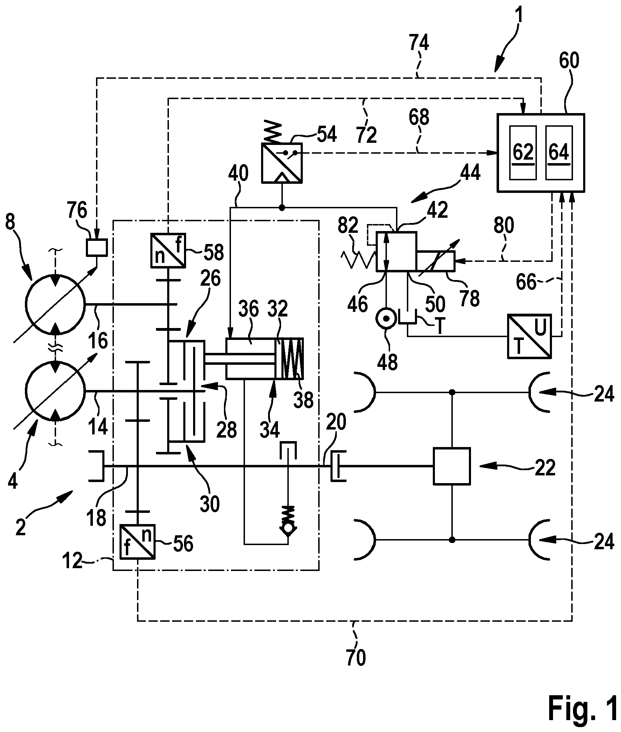

According to FIG. 1, a traction drive has a hydrostatic transmission 2 with a hydraulic machine (not shown) which operates as a hydraulic pump in the traction mode of the traction drive and two hydraulic machines 4 and 8 which operate as hydraulic motors in the specified traction mode. The two hydraulic motors 4, 8 are connected, on the one hand, to the hydraulic pump via working lines in a closed hydraulic circuit. The hydraulic machines can be adjusted in their expulsion volume, while they are each embodied as an axial piston machine with a swashplate design or bent-axis design.

The hydraulic pump is connected via its drive shaft to a drive machine, which is configured as a diesel engine. A first hydraulic motor 4 (in the description also identified as permanent motor) of the two hydraulic motors 4, 8 has a first drive shaft 14, and the second hydraulic motor 8 (in the description also identified as temporary motor) has a second drive shaft 16. A coupling system 12 with the two input shafts 14 and 16 is connected downstream of the hydrostatic transmission 2 as a mechanical transmission. An output shaft 20 of the coupling system 12 is connected in a rotationally fixed manner to a differential 22 of a drive axle, which rotates a predetermined number of wheels 24 (in this particular case four).

The coupling system 12 has a hydraulic coupling 26 with a first coupling section 28 non-rotatably connected to the first drive shaft 14 and a second coupling section 30 non-rotatably connected to the second drive shaft 16 via a gear arrangement. In the exemplary embodiment shown, the clutch 26 is designed as a multi-plate clutch.

A piston 32 of a hydraulic cylinder 34 is connected to the second coupling section 30 in order to actuate the hydraulic coupling 26. In the exemplary embodiment shown in Figure 1, the hydraulic coupling 26 is designed as a negative clutch, which means that the hydraulic coupling 26 is actuated or closed when an actual pressure p of a cylinder chamber 36 delimited by the piston 32 is lower than a predetermined value, which is, among other things, dependent from the spring force of a clutch spring 38.

The cylinder chamber 36 is connected via a pressure medium line 40 to a first pressure medium connection 42 of pressure control means 44 configured as a pressure control valve. Furthermore, the cylinder chamber 36 is further connected to a flushing line, so as to be able to release the oil contained within the cylinder chamber if a maximal pressure (for example 20 bar) is overcome.

A second pressure medium connection 46 of the pressure control means 44 is connected to a pressure medium source 48 and a third pressure medium connection 50 is connected to a pressure medium tank T. The tank T has a temperature detection unit 52, through which a pressure medium temperature can be detected.

As a further sensor system, a pressure detection unit 54 is provided, which is designed as a pressure sensor, through which a pressure in the pressure medium line 40 can be detected. In addition, a first speed detection unit 56 is provided, through which an actual speed of the shaft 18 can be detected and, knowing a transmission ratio of the shaft 18 to the first drive shaft 14, an actual speed of the first drive shaft 14 and thus an actual speed n1 of the first coupling section 28 can be determined. In addition, the transmission 1 has a second speed detection unit 58, through which an actual speed of the second drive shaft 16 can be detected and, knowing a gear ratio of the second drive shaft 16 to the second clutch section 30, an actual speed n2 of the second clutch section 30 can be determined.

To control the actuation of the clutch 26, the hydrostatic travel drive 1 has a control unit 60 with a memory unit 62 and a processor unit 64.

The temperature detection unit 52 is connected to the control unit 60 via a signal line 66, the pressure detection unit 54 via a signal line 68, the first speed detection unit 56 via a signal line 70 and the second speed detection unit 58 via a signal line 72.

The control unit 60 is connected via a signal line 74 to an adjusting device 76, through which the stroke volume of the second hydraulic machine 8 can be adjusted.

The pressure control means 44 has an electromagnet 78 which is connected to the control unit 60 via a signal line 80. A valve body of the pressure control means 44 is acted in the direction of a pressure medium connection of the first pressure medium connection 42 to the second pressure medium connection 46, by means of the current provided through the signal line 80 to the electromagnet 78. In the opposite direction, which corresponds to the actuation direction of the clutch 26 (in the case shown of the negative clutch), the valve body is acted by a spring force of a spring 82 and by the actual pressure p in the cylinder chamber 36 at the first pressure medium connection 42.

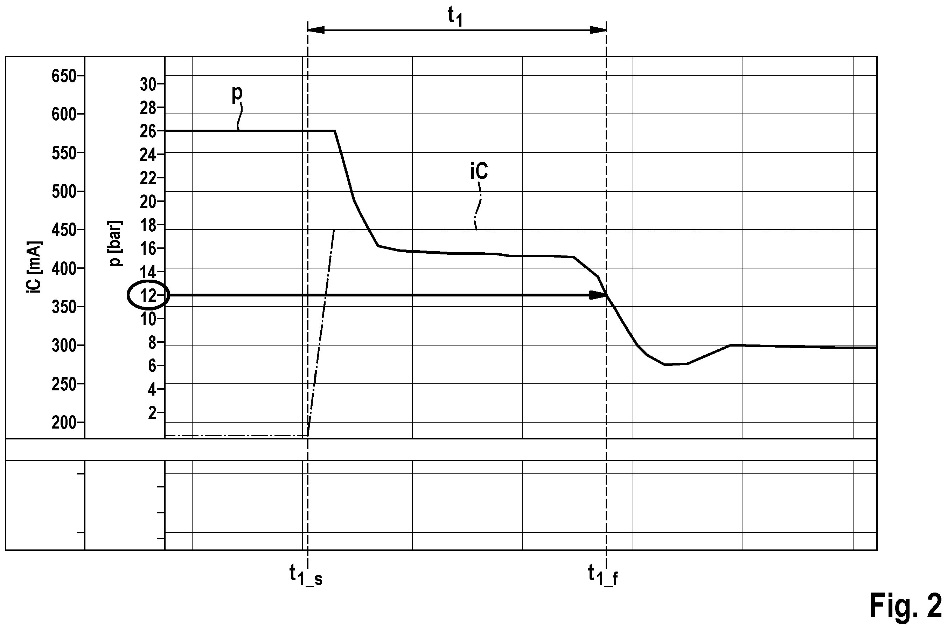

In the following, with reference to the Figures 2 to 4, a calibrating method for the system disclosed in figure 1 will be described.

This calibrating method is normally performed for every vehicle at the End of Line (EOL) and during the commissioning and can be requested by the operator every time. It is also recommended to execute the calibration after a specific number of working hours in operation (to be defined from gearbox and machine manufacturer), by badly driving performance noticed by the driver, or after a service in the hydrostatic units or the clutch circuit of the gearbox.

As described in the previous paragraphs, when the pressure control means 44 are not energized, the pressure in the cylinder chamber is the maximum achievable and almost corresponds to the system charging pressure at the pressure medium source 48. For example, the pressure can be a value between 27 and 30 bar. As the current via a signal line 80 increases, the pressure in the cylinder chamber 36 starts to decrease.

At the beginning of the calibration process, a venting process of the system is executed.

In particular, in order to remove any possible presence of the air from the pressure medium lines, from the pressure control means 44 and from the hydraulic cylinder 34, the coupling system 12, and in particular the clutch 26 thereof, is closed and open several times, by operating the pressure control means 44. The number of times of respectively opening and closing the clutch 26 for executing the venting process can be greater than ten times, preferably equal to fifteen times.

During this venting process the output speed of the diesel engine is monitored to be preferably between 1100 and 1300 rpm, the parking brake of the vehicle is activated, both the permanent motor speed and the temporary motor speed are equal to 0 and the current of the pressure control means is controlled with a rectangular wave cycle. During this venting process, the temperature of the pressure medium measured by the sensor 52 is maintained almost constant.

During this venting process, and in particular in correspondence with the last X times the coupling system 12 is closed and reopened (wherein X is preferably greater that four, more preferably equal to five), a first time interval $t_1$ is measured. The first time interval $t_1$ is a time requested for reaching a predetermined pressure value inside the hydraulic cylinder 34. This predetermined pressure is a pressure at which the first coupling section 28 is still not completely engaged with the second coupling section 30 (the kiss point has still not been reached).

The predetermined pressure is determined by measuring the pressures inside said hydraulic cylinder 34, at which the first coupling section 28 is completely engaged (the torque is transmitted therebetween) with the second coupling section 30 and by choosing a value of the pressure inside the hydraulic cylinder 34 at which the first coupling section 28 is not completely engaged with the second coupling section 30 and wherein the absolute value of the pressure difference between the predetermined pressure and the foremost pressure value, at which the first coupling section 28 is completely engaged with the second coupling section 30, is equal to a predetermined value (for example equal to 4 bar).

As will be clearer explained in the prosecution of the description, in the calibration process it is important to estimate a function for the first time interval $t_1$ over the temperature of the pressure medium in order to be able to estimate a value of the first time interval $t_1$ for each temperature of the pressure medium.

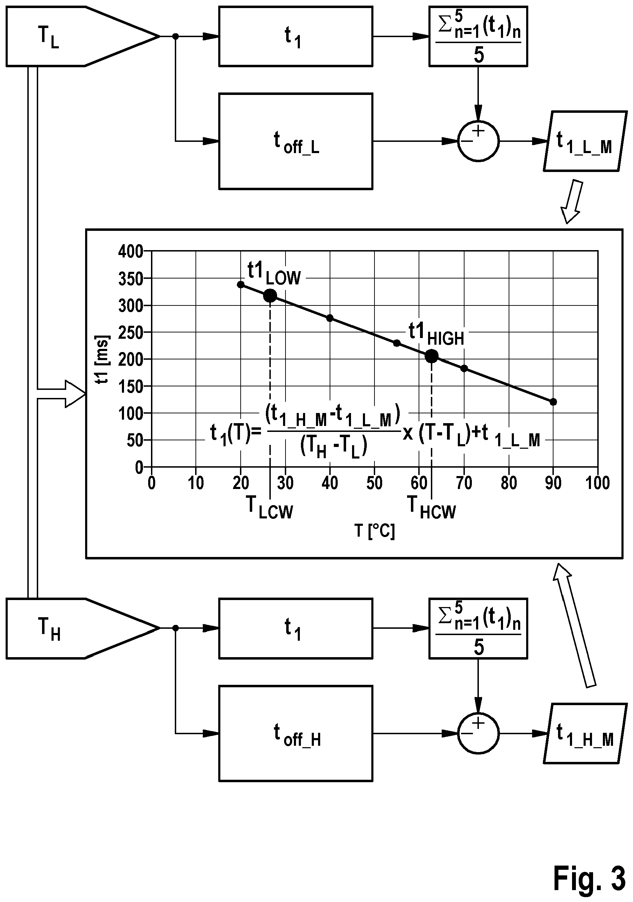

This process for determining the first time interval $t_1$, from now on simply called "emptying time", is explained in details with reference to figures 2 and 3.

Figure 2 shows a value of the pressure measured by the sensor 54 during the closing of the coupling system 12 (with a continuous line) and the current delivered to the electromagnet 78 through the signal line 80 (with a dashed line). In this particular example, the predetermined pressure is considered to be equal to 12 bar. As shown in figure 2, after increasing the current $i_c$ delivered to the actuator 78 of the pressure control means 44 the pressure starts with some delay to decrease (wherein the delay is dependent from the temperature of the pressure medium). After some time a stable condition is reached. After some time a strong pressure gradient occurs, which is caused by the approach to the kiss point. The predetermined value for the pressure is taken along this pressure drop (for example at the middle point between the pressure value at which a completely engagement occurs and the pressure value of said stable condition, before the strong pressure gradient occurs).

Therefore the emptying time $t_1$ it taken to be the difference in time between the time when the predetermined value for the pressure is reached and the time at which the current $i_c$ has been increased (t1_f - t1_s of figure 2).

As described above, the emptying time $t_1$ is measured preferably 5 times and a mean value is then calculated.

Figure 3 gives an overview for the method used for estimating an interpolating function, which is a function representing the emptying time $t_1$ over the temperature, so that the emptying time can be estimated for each temperature of the pressure medium.

The above described mean value of the emptying time is calculated for two different temperature values of the pressure medium: a low temperature $T_L$ comprised between 20 and 40°C and a high temperature $T_H$ comprised between 60 and 90°C.

The calculated mean value for the high and the low temperature of the pressure medium is corrected with an offset value, which is subtracted to the calculated mean value. The offset value is a function of the temperature of the pressure medium and is due to the fact that at lower temperatures the viscosity of the pressure medium has a higher influence. This offset value is important, as will be clearer in the prosecution of the description, for having more freedom in the way the kiss point is reached (to make possible of having the modulation phases until the clutch is closed). The offset value can be obtained from a function obtained during tests in different machines and at different temperatures of the pressure medium.

*Equation 1*

$$t_{1\_L\_M} = \frac{\sum_{n=1}^{5}(t_1)_n}{5} - t_{off\_L}$$

$$t_{1\_H\_M} = \frac{\sum_{n=1}^{5}(t_1)_n}{5} - t_{off\_H}$$

wherein $t_{1\_L\_M}$ and $t_{1\_H\_M}$ are respectively the calculated low and high temperature mean value for the emptying time $t_1$, $t_1$ is the emptying time which is measured each time, $t_{off\_L}$ and $t_{off\_H}$ are respectively the offset values for the low and the high temperature value.

Based on the values of $t_{1\_L\_M}$ and $t_{1\_H\_M}$ it can be derived a function of $t_1$. In this particular example, since $t_1$ has been estimed for just two temperatures, the interpolating function is a linear function. In alternatives embodiments, the value of $t_1$ can be also estimated for more temperature values and a polynomial interpolating function of n grad (with n the number of the temperatures for which $t_1$ has been estimated) can be obtained.

In this particular embodiment, the interpolating function reads as follows:

*Equation 2*

$$t_1(T) = \frac{(t_{1\_H\_M} - t_{1\_L\_M})}{(T_H - T_L)} \times (T - T_L) + t_{1\_L\_M}$$

Wherein $t_1(T)$ is the interpolating function, which is a function dependent from the temperature T; $t_{1\_L\_M}$ and $t_{1\_H\_M}$ are respectively the calculated low and high mean value for the emptying time $t_1$, which have been calculated in the previous step with equation 1, $T_L$ and $T_H$ are the temperature of the pressure medium at which $t_{1\_L\_M}$ and $t_{1\_H\_M}$ are calculated.

After having calculated the interpolating function for the emptying time $t_1$, this disclosure describes the determination of the kiss point. It is to be noted that this step can be executed simultaneously with the determination of the emptying time $t_1$.

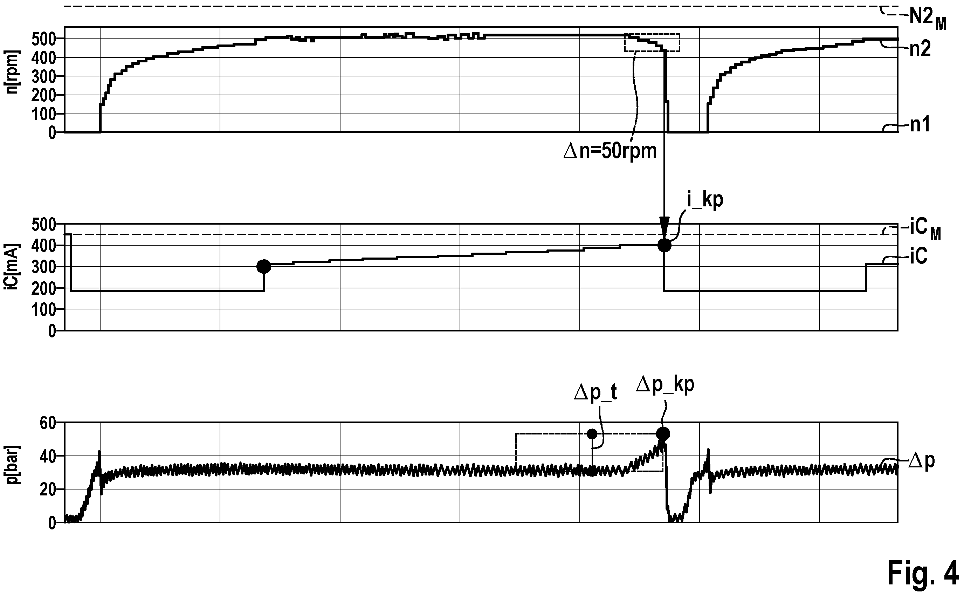

Figure 4 gives an overview of the method used for detecting the kiss point.

The graphic of figure 4 is divided into three portions. The upper portion shows the velocity n2 of the temporary motor 8 and the velocity n1 of the permanent motor 4 over the time, wherein n2$_M$ indicates an upper limit value for the velocity n2 of the temporary motor. The middle portion of figure 4 shows the value of the current i$_C$ delivered to the electromagnet 78 by the control unit 60 via the signal line 80 over the time, wherein iC$_M$ indicates an upper limit value for the current ic. The lower portion of figure 4 shows a value of the pressure $\Delta p$ delivered by the hydraulic machine (not shown) given in the hydrostatic transmission (where the permanent motor 4 and the temporary motor 6 are contained).

As shown in the upper portion of figure 4, in order to determine the kiss point, the rotation velocity n1 of the permanent motor 4 is equal to 0, the velocity n2 of the temporary motor 8 is preferably equal to 500 rpm. At the same time, an upper limit value n2$_M$ for the velocity n2 of the temporary motor 8 is given (for example equal to 700 rpm), so that it can be monitored that the velocity n2 of the temporary motor 8 does not exceed said upper limit. Furthermore, during this process, the diesel engine speed is controlled to be preferably between 1100 and 1300 rpm and the flow rate of the temporary motor 8 is preferably lower than 20% of the maximum flow rate so as to avoid higher friction torque at the clutch during calibration reducing the cycle life of the parts due to wearing of friction plates.

As shown in the middle portion of figure 4, the current ic delivered to the electromagnet 78 is gradually increased, starting from a value of current at which the coupling process has still not started (for example at 315 mA), so that the coupling system 12 starts to close and the second coupling section 30 approaches the first coupling section 28. The ramp of the current ic can be for example equal to 2.7 mA/s. The inclination of the ramp is preferably chosen in a way that the first coupling section and the second coupling section approach almost at a constant velocity to each other. As described above, iC$_M$ indicates an upper limit value for the current ic, which is for example equal to 450 mA. If at a value equal to iC$_M$ the kiss point has still not have been reached the system aborts the calibration process for safety reasons.

After some time, by gradually increasing the current i$_C$, the pressure $\Delta p$ delivered by the hydraulic machine starts to increase. After some time the velocity of the temporary motor n2 starts to decrease, due to the friction between the first and the second coupling section 28, 30.

When the velocity n2 of the temporary motor 8 is reduced/braked about a predetermined amount, it can be considered that the kiss point has been reached. The inventor has found that in some applications with a velocity decrease of about 50 rpm ($\Delta n$ = 50 rpm) it can be considered that the kiss point has been reached. When said $\Delta n$ has been reached the actual current ic is detected and this value is temporary saved. Alternatively, the kiss point can be also detecting by

measuring the pressure $\Delta p$ delivered by the hydraulic machine and by assuming that when a predetermined $\Delta p$ is delivered the kiss point has been reached. Therefore, when said $\Delta p$ has been reached the actual current $i_C$ is detected and this value is temporary saved.

This operation is repeated three times for at least two different temperatures of the pressure medium. Preferably, the temperatures are the same used for calculating the emptying time. In particular: a low temperature $T_L$ is comprised between 20 and 40°C and a high temperature $T_H$ is comprised between 60 and 90°C.

Based on the values of the current ic, which has been detected at the kiss point for the two different temperatures, it can be derived a function for the current ic at the kiss point. In this particular example, since ic has been measured for just two temperatures, the interpolating function is a linear function. In alternatives embodiments, the value of can be also measured for more temperature values and a polynomial interpolating function of n grad (with n the number of the temperatures for which ic has been estimated) can be obtained.

As described above, if at a value of the current ic equal to $i_{CM}$ the kiss point has still not have been reached the system aborts the calibration process for safety reasons. Analogously, if the velocity n2 of the temporary motor 8 exceeds the upper limit value $n2_M$ for the velocity n2 the system aborts the calibration process for safety reasons. Furthermore, the pressure difference $\Delta p$ of the hydrostatic units must be observed in order to assure that the torque transmitted from the temporary motor 8 during the kiss point detection, does not exceed a permissible value. This is a requirement of the gearbox manufacturer to avoid that the clutch discs are not damaged during the calibration. At the beginning of the detection, where the temporary motor 8 rotates at 500 rpm (in the example described above) a pressure difference $\Delta p_i$ is measured. When the kiss point is detected, the value of the pressure difference will be higher because of the braking of the temporary motor and a $\Delta p_k$ is detected. It is important that the requirements of the following equation are fulfilled:

## Equation 3

$$\Delta p_k - \Delta p_i \leq \Delta p_T$$

Wherein $\Delta p_T$ is a threshold value which has to be defined depending of the size of the motor, corresponding for instance to 20 Nm . Therefore, if during the kiss point detection the requirement of equation 3 is not fulfilled anymore, a diagnostic function has to abort the calibration process.

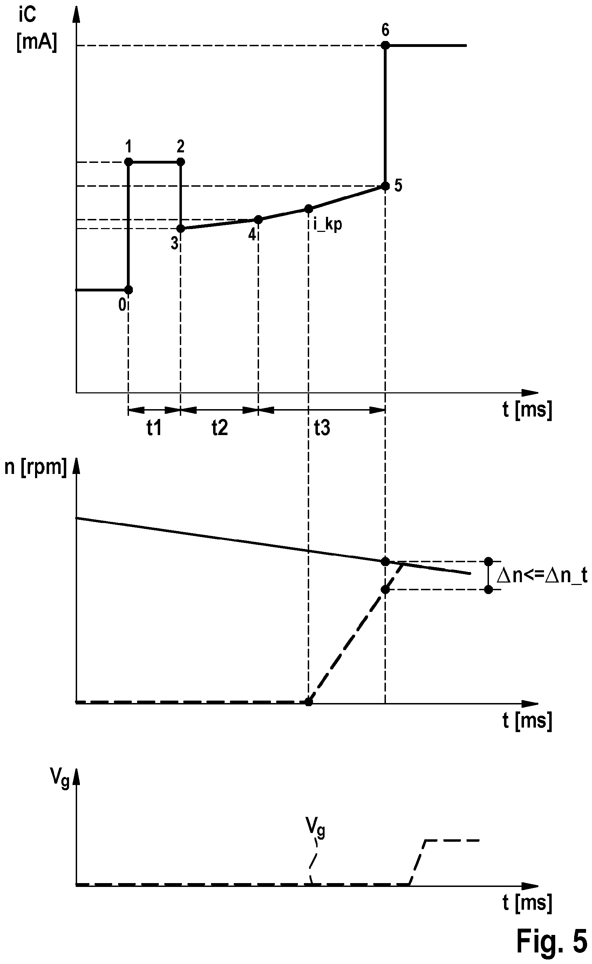

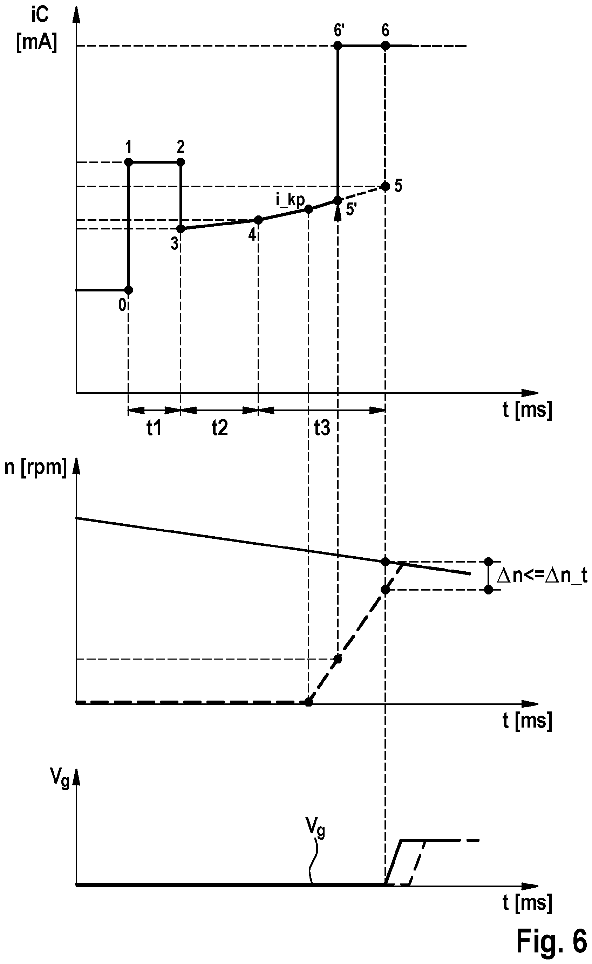

With reference to the figures 5 and 6 two alternative methods for controlling the coupling system 12 are described. Both figures 5 and 6 are divided into three portions. In the upper portion a value of the current $i_C$ over the time is represented. In the middle portion the velocity n1 of the permanent motor 4 (with a continuous line) and the velocity n2 of the temporary motor 8 (with a dashed line) over the time are represented. In the lower portion a value of the displacement $V_g$ (with a dashed line) of the temporary motor 8 over the time is represented.

It is to be noted that, in view of the description above, after having detected the actual temperature of the pressure medium both the emptying time t1 and the current ic at which the kiss point will be reached (i_kp) are known.

The control of the coupling system 12 and in particular of the first coupling section 28 and the second coupling section 30 is performed by controlling the current $i_C$ given to the actuator 78 of the pressure control means 44 and will be done when the downshift is requested depending on the vehicle velocity and drive pedal position.

While shifting from second to first gear, the temporary motor 8 has to be accelerated from 0 rpm to a velocity dependent from the permanent motor 4 speed.

For that, the first coupling section 28 and the second coupling section 30 should be moved quickly in order to reach a position near to the kiss point position. As shown in the upper portion of figure 5, this happens in the emptying phase $t_1$, which has been described above. Then, in the modulation phases $t_2$ and $t_3$ the first coupling section 28 and the second coupling section 30 will be closed slowly (the current ic is lower that during $t_1$). During the modulation phases $t_2$ and $t_3$ the approaching of the the first coupling section 28 and the second coupling section 30 is slowed down with respect with the approaching of the emptying phase $t_1$. Therefore, the modulation phases $t_2$ and $t_3$ can be simply called "modulation time", wherein during the modulation time the kiss point is reached.

The gradients of the modulation phases $t_2$ and $t_3$ are different in order to give flexibility for controlling different clutch system designs. The points 3 and 4 are given based on the calculated value the current ic at which the kiss point is reached (i_kp). For example, the current in 3 can be equal to i_kp-5mA and the current in 4 can be equal to i_kp-3mA. Furthermore, also the point 5 can be determined based on the i_kp. For example, the current in 5 can be equal to i_kp+7mA

When the kiss point is finally reached, the temporary motor 8 (see middle portion of Figure 5) will accelerate until reaching a speed in which the speed difference between the first coupling section 28 and the second coupling section 30 is less than a predetermined value $\Delta n\_t$, for example $\Delta n\_t$ is equal to 20 rpm (at the point 5 the following condition $\Delta n \leqq \Delta n\_t$ is fulfilled). At this point, the clutch will be completely closed (the current $i_C$ will suddenly increase). However, if at point 5 the velocity difference between the first coupling section 28 and the second coupling section 30 is higher than said predetermined value, for safety reasons the clutch will be completely reopened.

Finally, if the pressure in the cylinder chamber 36 is less than a predetermined value (for example 8 bar) the temporary motor 8 (see lower portion of figure 5) will be allowed for swiveling out and the temporary motor displacement $V_g$ will be continuously incremented.

In an alternative embodiment, in order to accelerate the coupling process, as shown in figure 6, the clutch will be completely closed earlier. In particular, if the velocity n2 of the temporary motor 8 is greater than a threshold value and if the gradient of the velocity of the temporary motor is greater than 0 (the velocity n2 is increasing) the clutch will be closed (the current $i_C$ will suddenly increase at point 5'). Additionally, if the pressure in the cylinder chamber 36 is less than a predetermined value (for example 8 bar) and the difference of velocities between the first coupling section 28 and the second coupling section 30 is less than 20 rpm the temporary motor 8 (see lower portion of figure 6) will be allowed for swiveling out and the temporary motor displacement $V_g$ will be continuously incremented.

As can be shown in the comparison at the lower portion of figure 4, in this particular embodiment the temporary motor displacement $V_g$ will increase earlier with respect to the embodiment shown in figure 5 (dashed line).

While the present invention has been described with reference to the embodiments described above, it is clear for the skilled person that it is possible to realize several modifications, variations and improvements of the present invention in the light of the teaching described above and within the ambit of the enclosed claims.

For example, even if only a working example for a negative clutch has been described in details, it is clear that the present invention can be also used with the same technical advantages in a positive clutch.

In addition, those areas in which it is believed that those of ordinary skill in the art are familiar, have not been described herein in order not to unnecessarily obscure the invention described. Accordingly, the invention is not to be limited by the specific illustrative embodiments, but only by the scope of the appended claims.

**Claims**

1. Method for controlling a coupling system (12) of a summation mechanical transmission which is configured to couple a first drive shaft (14) and a second drive shaft (16) during coupling, the coupling system (12) comprising an hydraulic coupling (26) with two releasable coupling sections (28, 30), wherein a first coupling section (28) is connected to the first drive shaft (14) and a second coupling section (30) is connected to the second drive shaft (16), the coupling system (12) further comprising an hydraulic cylinder (34) which is connected to one of the first and the second coupling sections (28, 30) and is configured to engage and to disengage said first coupling section (28) with said second coupling section (30) based on a pressure inside said hydraulic cylinder (34), wherein the pressure inside said hydraulic cylinder (34) can be regulated by means of a pressure regulating device (44),

   wherein said pressure regulating device (44) comprises activating means (78), which are configured to regulate the pressure inside said hydraulic cylinder (34) based on a current ($i_C$) provided to said activating means (78); the method comprising the following steps:

   a. Proving said activating means (78) with a current ($i_C$) for a first time interval ($t_1$) such that said first coupling section (28) and said second coupling section (30) are approached to each other but the kiss point has still not be reached;
   b. After said first time interval ($t_1$) providing said activating means (78) for a modulation time interval ($t_2$, $t_3$) with a current ($i_C$) such that the approaching speed of said first coupling section (28) and said second coupling section (3) is slowed down with respect to the approaching during said first time interval ($t_1$), wherein during said modulation time interval ($t_2$, $t_3$) the kiss point is reached;

   said method being **characterized in that** said modulation time interval ($t_2$, $t_3$) is divided into a second time interval ($t_2$) and a third time interval ($t_3$), wherein both in said second time interval ($t_2$) and said third time interval ($t_3$) the current ($i_C$) provided to said activating means (78) is gradually increased or decreased with a predetermined slope, wherein the slope of the current ($i_C$) during said second time interval ($t_2$) is different with respect to the slope of the current ($i_C$) during said third time interval ($t_3$).

2. Method according to claim 1, wherein the slope of the current ($i_C$) during said second time interval ($t_2$) is lower than the slope of the current ($i_C$) during said third time interval ($t_3$).

3. Method according to any of claims 1 or 2, wherein when a speed difference between said first coupling section (28) and said second coupling section (30) is lower than a predetermined value ($\Delta n\_t$), said third time interval ($t_3$) is ended and a current ($i_C$) is provided to said activating means (78) so that said first coupling section (28) and said second coupling section (30) are completely engaged with each other.

4. Method according to any of claims 1 to 3, wherein said first drive shaft (14) is connected to a first hydraulic motor (4) and said second drive shaft (16) is connected to a second hydraulic motor (8), wherein said first and said second hydraulic motors (4, 8) are motors of an hydraulic transmission.

5. Method according to any of claims 1 to 4, wherein said coupling system is a mechanical transmission of a vehicle, which is positioned between a hydrostatic transmission comprising a plurality of motors (4, 8) and an output shaft (20) of the summation mechanical transmission.

6. Method according to any of claims 1 to 5, wherein said first time interval ($t_1$) is a time used in an engagement process during which the first coupling section (28) and the second coupling section (30) are going to be engaged with each other, wherein during said first time interval ($t_1$) the first coupling section (28) and the second coupling section (30) approach each other at the beginning of said engagement process before the approaching of the first coupling section (28) and the second coupling section (30) is slowed down during said second time interval ($t_2$).

7. Method according to any of claims 1 to 6, wherein said activating means is an electromagnet.

**Patentansprüche**

1. Verfahren zum Steuern eines Kopplungssystems (12) eines mechanischen Summierungsgetriebes, das dazu ausgelegt ist, eine erste Antriebswelle (14) und eine zweite Antriebswelle (16) während eines Koppelns zu koppeln, wobei das Kopplungssystem (12) eine Hydraulikkopplung (26) mit zwei lösbaren Kopplungsabschnitten (28, 30) umfasst, wobei ein erster Kopplungsabschnitt (28) mit der ersten Antriebswelle (14) verbunden ist und ein zweiter Kopplungsabschnitt (30) mit der zweiten Antriebswelle (16) verbunden ist, wobei das Kopplungssystem (12) ferner einen Hydraulikzylinder (34) umfasst, der mit einem des ersten und des zweiten Kopplungsabschnitts (28, 30) verbunden ist und dazu ausgelegt ist, basierend auf einem Druck in dem Hydraulikzylinder (34) den ersten Kopplungsabschnitt (28) mit dem zweiten Kopplungsabschnitt (30) in Eingriff zu bringen und den Eingriff zu lösen, wobei der Druck in dem Hydraulikzylinder (34) mittels einer Druckregelvorrichtung (44) geregelt werden kann,

wobei die Druckregelvorrichtung (44) Aktivierungsmittel (78) umfasst, die dazu ausgelegt sind, den Druck in dem Hydraulikzylinder (34) basierend auf einem Strom ($i_c$) zu regeln, mit dem die Aktivierungsmittel (78) versorgt werden;
wobei das Verfahren die folgenden Schritte umfasst:

a. Versorgen der Aktivierungsmittel (78) mit einem Strom ($i_c$) für ein erstes Zeitintervall ($t_1$), so dass der erste Kopplungsabschnitt (28) und der zweite Kopplungsabschnitt (30) einander angenähert werden, der Berührungspunkt jedoch noch nicht erreicht wurde;
b. nach dem ersten Zeitintervall ($t_1$), Versorgen der Aktivierungsmittel (78) für ein Modulationszeitintervall ($t_2$, $t_3$) mit einem Strom ($i_c$), so dass die Annäherungsgeschwindigkeit des ersten Kopplungsabschnitts (28) und des zweiten Kopplungsabschnitts (3) in Bezug auf die Annäherung während des ersten Zeitintervalls ($t_1$) verlangsamt wird, wobei während des Modulationszeitintervalls ($t_2$, $t_3$) der Berührungspunkt erreicht wird;

wobei das Verfahren **dadurch gekennzeichnet ist, dass** das Modulationszeitintervall ($t_2$, $t_3$) in ein zweites Zeitintervall ($t_2$) und ein drittes Zeitintervall ($t_3$) unterteilt wird, wobei sowohl in dem zweiten Zeitintervall ($t_2$) als auch dem dritten Zeitintervall ($t_3$) der Strom ($i_c$), mit dem die Aktivierungsmittel (78) versorgt werden, mit einer vorbestimmten Steigung allmählich erhöht oder verringert wird, wobei sich die Steigung des Stroms ($i_c$) während des zweiten Zeitintervalls ($t_2$) in Bezug auf die Steigung des Stroms ($i_c$) während des dritten Zeitintervalls ($t_3$) unterscheidet.

2. Verfahren nach Anspruch 1, wobei die Steigung des Stroms ($i_c$) während des zweiten Zeitintervalls ($t_2$) kleiner ist als die Steigung des Stroms ($i_c$) während des dritten Zeitintervalls ($t_3$).

3. Verfahren nach einem der Ansprüche 1 oder 2, wobei, wenn eine Drehzahldifferenz zwischen dem ersten Kopplungsabschnitt (28) und dem zweiten Kopplungsabschnitt (30) kleiner ist als ein vorbestimmter Wert ($\Delta n\_t$), das dritte Zeitintervall ($t_3$) beendet wird und die Aktivierungsmittel (78) mit einem Strom ($i_c$) vorsorgt werden, so dass der erste Kopplungsabschnitt (28) und der zweite Kopplungsabschnitt (30) vollständig miteinander in Eingriff kommen.

4. Verfahren nach einem der Ansprüche 1 bis 3, wobei die erste Antriebswelle (14) mit einem ersten Hydraulikmotor (4) verbunden ist und die zweite Antriebswelle (16) mit einem zweiten Hydraulikmotor (8) verbunden ist, wobei der erste und der zweite Hydraulikmotor (4, 8) Motoren eines hydraulischen Getriebes sind.

5. Verfahren nach einem der Ansprüche 1 bis 4, wobei das Kopplungssystem ein mechanisches Getriebe eines Fahrzeugs ist, das zwischen einem hydrostatischen Getriebe umfassend eine Mehrzahl von Motoren (4, 8) und einer Abtriebswelle (20) des mechanischen Summierungsgetriebes positioniert ist.

6. Verfahren nach einem der Ansprüche 1 bis 5, wobei das erste Zeitintervall ($t_1$) eine Zeit ist, die in einem Eingriffsprozess verwendet wird, während dessen der erste Kopplungsabschnitt (28) und der zweite Kopplungsabschnitt (30) miteinander in Eingriff gebracht werden, wobei während des ersten Zeitintervalls ($t_1$) der erste Kopplungsabschnitt (28) und der zweite Kopplungsabschnitt (30) sich einander zu Beginn des Eingriffsprozesses annähern, bevor die Annäherung des ersten Kopplungsabschnitts (28) und des zweiten Kopplungsabschnitts (30) während des zweiten Zeitintervalls ($t_2$) verlangsamt wird.

7. Verfahren nach einem der Ansprüche 1 bis 6, wobei das Aktivierungsmittel ein Elektromagnet ist.

## Revendications

1. Procédé de commande d'un système de couplage (12) d'une transmission mécanique à sommation qui est conçu pour coupler un premier arbre d'entraînement (14) et un second arbre d'entraînement (16) pendant le couplage, le système de couplage (12) comprenant un couplage hydraulique (26) ayant deux sections de couplage (28, 30) libérables, une première section de couplage (28) étant reliée au premier arbre d'entraînement (14) et une seconde section de couplage (30) étant reliée au second arbre d'entraînement (16), le système de couplage (12) comprenant en outre un vérin hydraulique (34) qui est relié à l'une des première et seconde sections de couplage (28, 30) et étant conçu pour mettre en prise ladite première section de couplage (28) avec ladite seconde section de couplage (30) et pour les désolidariser sur la base d'une pression à l'intérieur dudit vérin hydraulique (34), la pression à l'intérieur dudit vérin hydraulique (34) pouvant être régulée au moyen d'un dispositif de régulation de pression (44),

   ledit dispositif de régulation de pression (44) comprenant un moyen d'activation (78) qui est conçu pour réguler la pression à l'intérieur dudit vérin hydraulique (34) sur la base d'un courant ($i_c$) fourni audit moyen d'activation (78) ;
   le procédé comprenant les étapes consistant à :

   a. fournir audit moyen d'activation (78) un courant ($i_c$) pendant un premier intervalle de temps ($t_1$) de sorte que ladite première section de couplage (28) et ladite seconde section de couplage (30) soient rapprochées l'une de l'autre mais que le point de contact n'ait pas encore été atteint ;
   b. après ledit premier intervalle de temps ($t_1$), fournir audit moyen d'activation (78), pendant un intervalle de temps de modulation ($t_2$, $t_3$), un courant ($i_c$) tel que la vitesse d'approche de ladite première section de couplage (28) et de ladite seconde section de couplage (3) soit ralentie par rapport à l'approche pendant ledit premier intervalle de temps ($t_1$), le point de contact étant atteint pendant ledit intervalle de temps de modulation ($t_2$, $t_3$) ;

   ledit procédé étant **caractérisé en ce que** ledit intervalle de temps de modulation ($t_2$, $t_3$) est divisé en un deuxième intervalle de temps ($t_2$) et un troisième intervalle de temps ($t_3$), pendant à la fois ledit deuxième intervalle de temps ($t_2$) et ledit troisième intervalle de temps ($t_3$), le courant ($i_c$) fourni audit moyen d'activation (78) étant progressivement augmenté ou diminué avec une pente prédéfinie, la pente du courant ($i_c$) pendant ledit deuxième intervalle de temps ($t_2$) étant différente de la pente du courant ($i_c$) pendant ledit troisième intervalle de temps ($t_3$).

2. Procédé selon la revendication 1, la pente du courant ($i_c$) pendant ledit deuxième intervalle de temps ($t_2$) étant inférieure à la pente du courant ($i_c$) pendant ledit troisième intervalle de temps ($t_3$).

3. Procédé selon l'une quelconque des revendications 1 ou 2, lorsqu'une différence de vitesse entre ladite première section de couplage (28) et ladite seconde section de couplage (30) est inférieure à une valeur prédéfinie ($\Delta$n_t), ledit troisième intervalle de temps ($t_3$) étant terminé et un courant ($i_c$) étant fourni audit moyen d'activation (78) de sorte que ladite première section de couplage (28) et ladite seconde section de couplage (30) soient complètement en prise l'une avec l'autre.

**4.** Procédé selon l'une quelconque des revendications 1 à 3, ledit premier arbre d'entraînement (14) étant relié à un premier moteur hydraulique (4) et ledit second arbre d'entraînement (16) étant relié à un second moteur hydraulique (8), lesdits premier et second moteurs hydrauliques (4, 8) étant des moteurs d'une transmission hydraulique.

**5.** Procédé selon l'une quelconque des revendications 1 à 4, ledit système de couplage étant une transmission mécanique d'un véhicule, qui est positionnée entre une transmission hydrostatique comprenant une pluralité de moteurs (4, 8) et un arbre de sortie (20) de la transmission mécanique à sommation.

**6.** Procédé selon l'une quelconque des revendications 1 à 5, ledit premier intervalle de temps ($t_1$) étant un temps utilisé dans un processus de mise en prise pendant lequel ladite première section de couplage (28) et la seconde section de couplage (30) vont venir en prise l'une avec l'autre, pendant ledit premier intervalle de temps ($t_1$) la première section de couplage (28) et la seconde section de couplage (30) s'approchant l'une de l'autre au début dudit processus de mise en prise avant que l'approche de la première section de couplage (28) et de la seconde section de couplage (30) ne soit ralentie pendant ledit second intervalle de temps ($t_2$).

**7.** Procédé selon l'une quelconque des revendications 1 à 6, ledit moyen d'activation étant un électroaimant.

Fig. 1

Fig. 2

EP 3 978 774 B1

$$t_1(T)= \frac{(t_{1\_H\_M}-t_{1\_L\_M})}{(T_H-T_L)} \times (T-T_L)+t_{1\_L\_M}$$

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102015208822